# EUROPEAN PATENT SPECIFICATION

(11) **EP 3 576 496 B1**
(45) Date of publication and mention of the grant of the patent: **05.05.2021**
(21) Application number: 19176931.4
(22) Date of filing: 28.05.2019
(51) Int. Cl.: H05B 45/10, H05B 45/395

(54) **LED DRIVER WITH A SILICON CONTROLLED DIMMER AND CONTROL METHOD THEREOF**
LED-TREIBER MIT EINEM SILICIUMGESTEUERTEN DIMMER UND STEUERUNGSVERFAHREN DAFÜR
COMMANDE DE DEL DOTÉE D'UN GRADATEUR COMMANDÉ AU SILICIUM ET SON PROCÉDÉ DE COMMANDE

(30) Priority: 28.05.2018 CN 201810525675; 10.05.2019 US 201916408615
(43) Date of publication of application: 04.12.2019
(73) Proprietor: Silergy Semiconductor Technology (Hangzhou) Ltd, Hangzhou, Zhejiang 310012 (CN)
(72) Inventor: CHEN, Huiqiang, Hangzhou, Zhejiang 310012 (CN); WANG, Zhishuo, Hangzhou, Zhejiang 310012 (CN); WANG, Jianxin, Hangzhou, Zhejiang 310012 (CN)
(74) Representative: Ström & Gulliksson AB

(56) References cited:
- CN-A- 107 995 747
- US-A1- 2017 196 052
- US-A1- 2018 139 816

## Description

### FIELD

The present invention relates to the field of power electronics, and particularly to an LED driver with a silicon-controlled dimmer and an associated control method.

### BACKGROUND

A silicon-controlled dimmer is a commonly used dimmer. The silicon-controlled dimmer can achieve dimming by applying a phase control method, that is, the silicon-controlled dimmer is controlled to be turned on every half period of the sine wave, in order to obtain the same conduction angle. By adjusting the chopped phase of the silicon-controlled dimmer, the conduction angle can be changed, thereby achieving dimming.

A silicon-controlled dimmer can use a TRIAC (Triode for Alternating Current). The characteristics of the TRIAC is that when a gate of the TRIAC is trigged to switch from being turned off to being turned off, a minimum current is needed to maintain the turn-on of the TRIAC, which is called latching current. After the TRIAC is turned on, a minimum current to maintain the conduction of the TRIAC is called a holding current. Usually, the holding current is related to junction temperature. Also, the latching current is 2-4 times greater than the holding current.

Besides, the conduction of the silicon-controlled dimmer is maintained by adding extra bus current or maintaining a larger constant current of the LED load, thereby resulting in large loss of the LED driver and low efficiency.

CN107995747A discloses a circuit module, a dimmable LED driving circuit and a control method. According to the technical scheme in the embodiment, when a conducting angle of a triac dimmer is smaller than a preset value, a driving current is controlled to be reduced to a current value corresponding to a conducting angle signal, the smaller conducting angle is enabled to correspond to smaller driving current, so that current ripples caused by conducting angle jitter can be effectively reduced, and the problem of LED load flashing is solved.

### SUMMARY

In view of the above, the present invention provides an LED driver with a silicon-controlled dimmer and a control method thereof. An input current of the LED driver is ensured to meet conduction requirements of the TRIAC dimmer, thereby reducing the loss of the LED driver and improving the efficiency of the LED driver.

In a first aspect, an LED driver is provided according to claim 1. The LED driver includes a supplementary current generating circuit, configured to generate a supplementary current to ensure that an input current of the LED driver meets conduction requirements of the silicon-controlled dimmer, where the supplementary current is determined in accordance with a drive current flowing through an LED load and a hold current of the silicon-controlled dimmer.

In an embodiment, the LED driver further includes a first transistor, configured to be arranged on a current path of the LED load, and being coupled in parallel with the supplementary current generating circuit; and a first controller, configured to adjust a first current flowing through the first transistor according to a drive current sampling signal, where the drive current sampling signal is configured to characterize the driver current flowing through the LED load.

In an embodiment, the sum of the supplementary current and the first current is greater than or equal to the holding current of the silicon-controlled dimmer.

In an embodiment, the supplementary current is greater than or equal to the holding current of the silicon-controlled dimmer.

In an embodiment, the first controller is configured to control the first transistor, such that a change trend of the drive current is opposite to a change trend of a DC bus.

In an embodiment, the first controller is configured to control a drive voltage of the first transistor, such that an average of the drive current follows an expected value.

In an embodiment, the supplementary current generating circuit includes a second transistor; a first sampling circuit, coupled between a source terminal of the second transistor and a source terminal of the first transistor, and being configured to obtain a supplementary current sampling signal for characterizing the supplementary current and the drive current sampling signal; and an error amplifier, configured to receive the supplementary current sampling signal and a reference signal that characterizes an expected value of the supplementary current, and generate a drive voltage of the second transistor, in order to adjust a current flowing through the second transistor, thereby adjusting the supplementary current.

In an embodiment, the LED driver further includes a second sampling circuit, coupled between a source terminal of the first transistor and a ground, and being configured to obtain the drive current sampling signal.

In an embodiment, the LED driver further includes a third transistor, coupled between the LED load and a drain terminal of the first transistor; and a second controller, configured to control the third transistor to be turned on continuously when the LED load is turned on.

In an embodiment, the third transistor is a high voltage transistor, and the first and second transistors are low voltage transistors, wherein a reverse withstand voltage of the third transistor is greater than that of the first and second transistors.

In an embodiment, the second controller includes a capacitor, coupled between a gate terminal of the third transistor and a ground, and being configured to control a drive voltage of the third transistor by being charged and discharged; and a diode, having an anode coupled to a drain terminal of the first transistor, and a cathode coupled to a gate of the third transistor, wherein the diode is configured to prevent the drive current from flowing back to a DC bus.

In an embodiment, the LED driver further includes a bleeder circuit, coupled to a DC bus, and being configured to be controlled to bleed a bus current.

In an embodiment, the bleeder circuit is configured to be turned off after the LED load is turned on.

In the second aspect, a control method for an LED driver with a silicon-controlled dimmer is provided according to claim 9. The method includes generating a supplementary current to ensure that an input current of the LED driver meets conduction requirements of the silicon-controlled dimmer, where the supplementary current is determined in accordance with a drive current flowing through an LED load and a hold current of the silicon-controlled dimmer.

In an embodiment, the method further includes adjusting a first current flowing through a first transistor according to a drive current sampling signal for characterizing the drive current flowing through the LED load.

In an embodiment, the sum of the supplementary current and the first current is greater than or equal to the holding current of the silicon-controlled dimmer.

It can be seen from the above that, the supplementary current generating circuit is provided on the current path of the LED load, such that the input current of the LED driver can meet conduction requirements of the silicon-controlled dimmer, thereby reducing the loss of the LED driver and improving the efficiency of the LED driver.

### BRIEF DESCRIPTION OF THE DRAWINGS

The above and other objects, features and advantages of the present invention are apparent from the following description of the embodiments of the present invention with reference to the drawings. In the drawings:
FIG. 1 is a schematic block diagram of an example LED driver;
FIG.2 is a waveform diagram of example operation of a first control method for an LED driver;
FIG.3 is a waveform diagram of example operation of a second control method for an LED driver;
FIG.4 is a schematic block diagram of a first example LED driver in accordance with embodiments of the present invention;
FIG.5 is a schematic block diagram of a second example LED driver in accordance with embodiments of the present invention;
FIG.6 is a schematic block diagram of a third example LED driver in accordance with embodiments of the present invention; and
FIG.7 is a flow chart of an example control method for an LED driver in accordance with embodiments of the present invention.

### DETAILED DESCRIPTION

The present invention is described below based on embodiments, and the present invention is not limited to the embodiments. In the following description of the present invention, specific details are described in detail. The present invention can be fully understood by those skilled in the art without the description of these details. Well-known methods, processes, flows, components and circuits are not described in detail to avoid obscuring the essence of the present invention.

In addition, it should be understood by those skilled in the art that, the drawings herein are only for illustration, and are not necessarily drawn to scale.

It should further be understood that in the following description, a "circuit" indicates a conductive loop formed by at least one component or sub-circuit by electrical connection or electromagnetic connection. In a case that a component or circuit is referred to as being "connected to" another component or being "connected" between two nodes, the component or circuit may be coupled or connected to another component directly or via an intermediate component. The connection between the two components may be physical connection, logical connection, or a combination thereof. In addition, in a case that the component is referred to as being "directly coupled to" or "directly connected to" another component, it is indicated that no intermediate component exists between the two components.

Unless otherwise indicated in the context, the words "including", "comprising", and the like, in the specification and the claims, should be interpreted as inclusive rather than being exclusive or exhaustive, i.e., "including but not limited to".

In the description of the present invention, it should be understood that, the terms "first", "second", and the like are only for descriptive purposes and should not be construed as indicating or implying relative importance. In addition, in the description of the present invention, the term "multiple" indicates two or more unless otherwise specified.

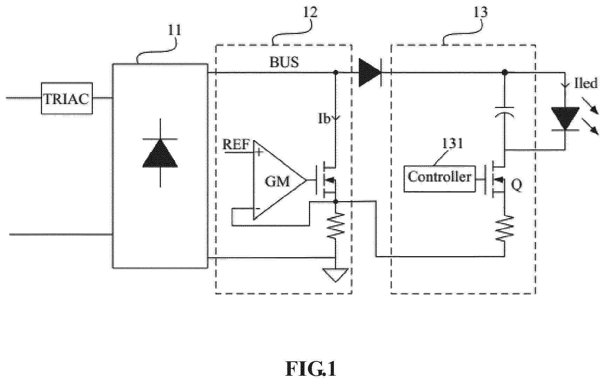

Referring now to FIG.1, shown is a schematic block diagram of an example LED driver. In this example, the LED driver can include silicon-controlled dimmer TRIAC, rectifier circuit 11, bleeder circuit 12 and linear regulation circuit 13. Silicon-controlled dimmer TRIAC is coupled between AC input port and rectifier circuit 11. Rectifier circuit 11 can convert an AC signal chopped by silicon-controlled dimmer TRIAC to a DC signal that is provided to a DC bus. Bleeder circuit12, coupled to the DC bus, can draw a bleed current Ib from the DC bus, in order to provide the latching current to trigger silicon-controlled dimmer TRIAC to be turned on, or in order to provide the holding current to maintain the conduction of silicon-controlled dimmer TRIAC. Also, linear regulation circuit 13 can adjust a drive current of an LED load, in order to make the drive current to be constant. In this example, linear regulation circuit 13 can include transistor Q and controller 131 for controlling transistor Q.

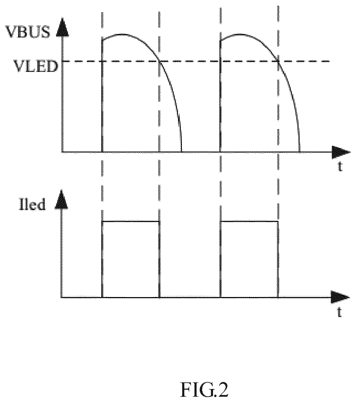

Referring now to FIG.2, shown is a waveform diagram of example operation of a first control method for an LED driver. In this particular example, when bus voltage VBUS is greater than conduction voltage VLED of the LED load, drive current Iled of the LED load can be controlled by controller 131 to be a larger constant value. Thus, the input current of the LED driver can maintain the conduction of silicon-controlled dimmer TRIAC. However, the current flowing through transistor Q is large in this method, such that the loss of transistor Q is large.

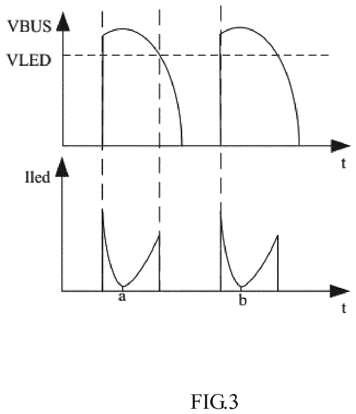

Referring now to FIG.3, shown is a waveform diagram of example operation of a second control method for an LED driver. In this example, transistor Q can be controlled by controller 131, such that a change trend of drive current Iled of the LED load can be opposite to a change trend of bus voltage VBUS. When bus voltage VBUS is greater than conduction voltage VLED of the LED load, the current flowing through transistor Q (that is, drive current Iled) can decrease with the increase of bus voltage VBUS. Since loss P of transistor Q can satisfy the equation: P=(VBUS-VLED)^{∗}Iled, the loss can be reduced. However, drive current Iled reaches a smaller value around points a and b, such that the input current of the LED driver may not be able to maintain the conduction of silicon-controlled dimmer TRIAC. In order to maintain the conduction of silicon-controlled dimmer TRIAC, the bleeder current may be drawn by bleeder circuit 12 after the LED load is turned on, such that the sum of bleeder current Ib and drive current Iled can meet the conduction requirements of silicon-controlled dimmer TRIAC. In this way, the loss of the LED driver is equal to VBUS^{∗}Ib, thus the loss of the LED driver can be reduced compared to the above method. But extra loss caused by large bleeder current may also make the loss of the LED driver relatively large.

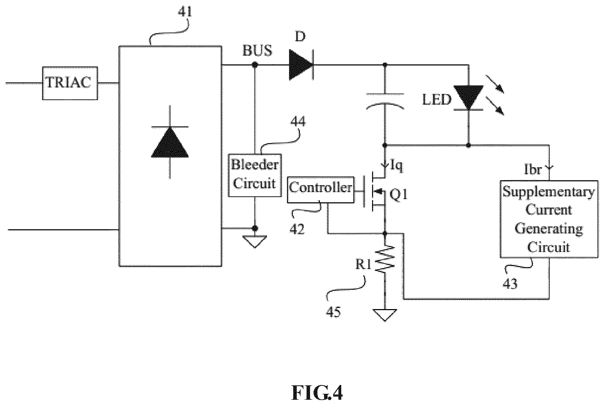

Referring now to FIG.4, shown is a schematic block diagram of a first example LED driver in accordance with embodiments of the present invention. In this example, the LED driver can include silicon-controlled dimmer TRIAC, rectifier circuit 41, bleeder circuit 44, controller 42, transistor Q1, sampling circuit 45 and supplementary current generating circuit 43. Similarly, silicon-controlled dimmer TRIAC is coupled between AC input port and rectifier circuit 41. Rectifier circuit 41 can convert an AC signal chopped by silicon-controlled dimmer TRIAC to a DC signal that is provided to a DC bus. Bleeder circuit 44, coupled to the DC bus, can draw extra DC bus current along with the LED load to reach the latching current of silicon-controlled dimmer TRIAC when silicon-controlled dimmer TRIAC is turned on, and can be turned off after the LED load is turned on, in order to reduce the loss.

In this example, transistor Q1 can be arranged on a current path of the LED load. Controller 42 can adjust current Iq that flows through transistor Q1 according to a drive current sampling signal that characterizes the drive current flowing through the LED load. Sampling circuit 45 is coupled between a source terminal of transistor Q1 and the ground for obtaining the drive current sampling signal. In this example, sampling circuit 45 can be achieved by resistor R1. Those skilled in the art should be understood that any circuit that can obtain the drive current sampling signal can be applied herein.

In this particular example, the LED driver can also include diode D coupled to the DC bus to prevent the current of the LED load from flowing back to the AC input port, thereby improving the stability of the LED driver.

Also, the change trend of the drive current of the LED load can be controlled by controller 42 to be opposite to the change trend of the rectified output voltage (i.e., bus voltage VBUS), such that the current flowing through transistor Q1 can be reduced, thereby further reducing the loss of the LED driver.

Further, controller 42 can control the drive voltage of transistor Q1 according to the drive current sampling signal, such that the average of the drive current of the LED load can follow an expected value, thereby ensuring the stable operation of the LED load.

Supplementary current generating circuit 43, coupled in parallel with transistor Q1, can generate supplementary current Ibr to enable the input current of the LED driver to meet the conduction requirements of silicon-controlled dimmer TRIAC. For example, the sum of supplementary current Ibr and current Iq flowing through transistor Q1 is greater than or equal to the holding current of silicon-controlled dimmer TRIAC, such that the input current of the LED driver can meet the conduction requirements of silicon-controlled dimmer TRIAC. In addition, supplementary current Ibr is greater than or equal to the holding current of silicon-controlled dimmer TRIAC, such that silicon-controlled dimmer TRIAC can be normally turned on when current Iq flowing through transistor Q1 may decrease to around zero.

From the above, the loss of the LED driver can be expressed as (VBUS-VLED)^{∗}Ibr. Compared to the loss in the example of FIG.3 (i.e.,VBUS^{∗}Ib), the loss of the LED driver in this example is greatly reduced since voltage VBUS-VLED is less than bus voltage VBUS.

In this example, the supplementary current generating circuit is provided on the current path of the LED load, such that the input current can meet conduction requirements of the silicon-controlled dimmer, thereby reducing the loss of the LED driver and improving the efficiency of the LED driver.

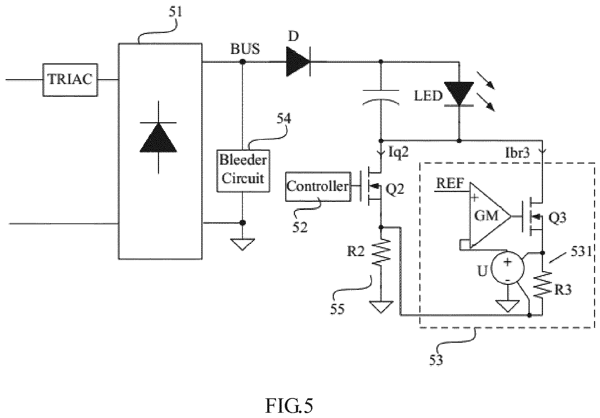

Referring now to FIG.5, shown is a schematic block diagram of a second example LED driver in accordance with embodiments of the present invention. In this example, the LED driver can include silicon-controlled dimmer TRIAC, rectifier circuit 51, bleeder circuit 54, controller 52, transistor Q2, sampling circuit 55 and supplementary current generating circuit 53. Similarly, silicon-controlled dimmer TRIAC is coupled between AC input port and rectifier circuit 51. Rectifier circuit 51 can convert the AC signal chopped by silicon-controlled dimmer TRIAC to the DC signal that is outputted to the DC bus. Bleeder circuit 54, coupled to the DC bus, can draw extra DC bus current along with the LED load to reach the latching current of silicon-controlled dimmer TRIAC when silicon-controlled dimmer TRIAC is turned on, and can be turned off after the LED load is turned on to reduce the loss.

Controller 52 can adjust current Iq2 flowing through transistor Q2 according to the drive current sampling signal that characterizes the drive current flowing through the LED load. Sampling circuit 55 is coupled between a source terminal of transistor Q2 and the ground to obtain the drive current sampling signal. In this particular example, sampling circuit 55 can be achieved by resistor R2. It should be understood for those skilled in the art that any circuit that can obtain the drive current sampling signal can be applied herein.

In this example, the LED driver can also include diode D coupled to the DC bus to prevent the current of the LED load from flowing back to the AC input port, thereby improving the stability of the LED driver.

Also, the change trend of the drive current of the LED load can be controlled by controller 42 to be opposite to the change trend of the rectified output voltage (i.e., bus voltage VBUS), such that the current flowing through transistor Q2 can be reduced, thereby further reducing the loss of the LED driver.

Further, controller 52 can control the drive voltage of transistor Q2 according to the drive current sampling signal, such that the average of the drive current of the LED load can follow the expected value, thereby ensuring the stable operation of the LED load.

Supplementary current generating circuit 53, coupled in parallel with transistor Q2, can generate supplementary current Ibr3 to enable the input current of the LED driver to meet the conduction requirements of silicon-controlled dimmer TRIAC. Supplementary current generating circuit 53 can include transistor Q3, error amplifier GM and sampling circuit 531. Sampling circuit 531 can include resistor R3 that coupled between a source of transistor Q3 and the source of transistor Q2, and controlled voltage source U. Also, sampling circuit 531 can obtain a supplementary current sampling signal for characterizing supplementary current Ibr3 at an output terminal of voltage source U. In this particular example, sampling circuit 531 can be achieved by resistor R3 and controlled voltage source U, and the resistor R3 is also coupled between two control terminals of voltage source U. It should be understood by those skilled in the art that any circuit that can obtain the second current sampling signal can be applied herein. Input terminals of error amplifier GM can respectively receive the supplementary current sampling signal and reference signal REF that characterizes the expected value of supplementary current Ibr3, and an output terminal of error amplifier GM can generate the drive voltage for transistor Q3 to adjust the current flowing through transistor Q3(i.e., supplementary current Ibr3).

When the LED load is turned on, supplementary current Ibr3 can be adjusted, such that the sum of supplementary current Ibr3 and current Iq2 flowing through transistor Q2 can be greater than or equal to the holding current of silicon-controlled dimmer TRIAC, in order for the input current of the LED driver to meet the conduction requirements of silicon-controlled dimmer TRIAC.

Further, supplementary current Ibr3 can be adjusted to be greater than or equal to the holding current of silicon-controlled dimmer TRIAC, such that the input current of the LED driver can meet the conduction requirements of silicon-controlled dimmer TRIAC.

From the above, the loss of the LED driver in this example is (VBUS-VLED)^{∗}Ibr3. Compared to the loss in the example of FIG.3 (i.e.,VBUS^{∗}Ib), the loss of the LED driver in this example is greatly reduced.

In this example, the supplementary current generating circuit is provided on the current path of the LED load, such that the input current of the LED driver can meet conduction requirements of the silicon-controlled dimmer, thereby reducing the loss of the LED driver and improving the efficiency of the LED driver.

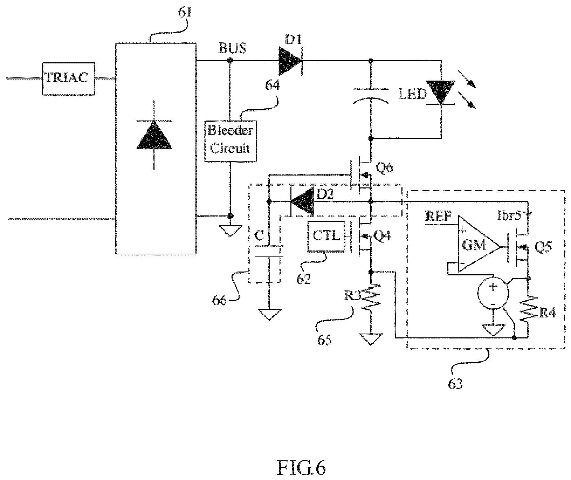

Referring now to FIG.6, shown is a schematic block diagram of a third example LED driver in accordance with embodiments of the present invention. In this example, the LED driver can include silicon-controlled dimmer TRIAC, rectifier circuit 61, bleeder circuit 64, controller 62, transistor Q4, sampling circuit 65, supplementary current generating circuit 63, diode D1, transistor Q6 and controller 66. The operation method and connection method of silicon-controlled dimmer TRIAC, rectifier circuit 61, bleeder circuit 64, controller 62, transistor Q4, sampling circuit 65, supplementary current generating circuit 63 and diode D1 are the same with those in FIG.5, which may not be described herein.

In this particular example, transistor Q6 is coupled between the LED load and a drain terminal of transistor Q4, and can be controlled by controller 66 to be turned on continuously when the LED driver is turned on. Also, controller 66 can include diode D2 and capacitor C. An anode of diode D2 is coupled to the drain terminal of transistor Q4, and is also coupled to a drain terminal of transistor Q5 in supplementary current generating circuit 63. A cathode of diode D2 is coupled to a gate terminal of transistor Q6. Capacitor C is coupled between the gate terminal of transistor Q6 and the ground, and can control the drive voltage for transistor Q6 by the charge and discharge characteristics. Diode D2 is provided to prevent a discharging current of capacitor C from flowing backwards when capacitor C is discharged.

In this particular example, the loss of the LED driver in this example is (VBUS-VLED-VQ6)^{∗}Ibr5, where VQ6 is the conduction voltage of transistor Q6, and Ibr5 is a supplementary current flowing through transistor Q5. Therefore, the loss of the LED driver can be further reduced, and the efficiency of the LED driver can be improved. Also, transistor Q6 is a high voltage transistor, and transistors Q4 and Q5 are low voltage transistors (while transistors Q2 and Q3 in FIG.5 are all high voltage transistors). The high voltage transistor is a transistor having a higher reverse withstand voltage, that is, the high voltage transistor can withstand high reverse voltage without reverse breakdown. Also, the manufacturing cost of the high voltage transistor is far higher than the manufacturing cost of the low voltage transistor. Thus, the LED driver in this example can reduce the manufacturing cost compared to the LED driver in FIG.5.

In this example, the supplementary current generating circuit is provided on the current path of the LED load, such that the input current of the LED driver can meet conduction requirements of the silicon-controlled dimmer, thereby reducing the loss of the LED driver and improving the efficiency of the LED driver.

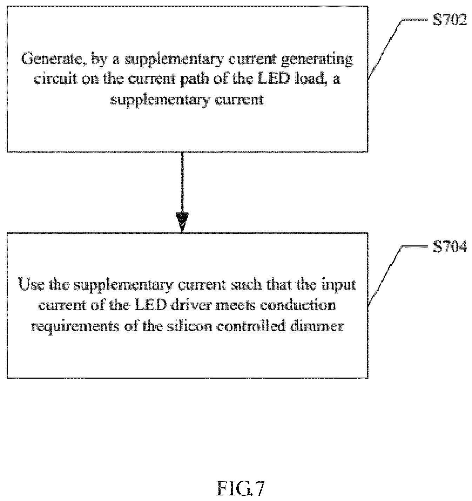

Referring now to FIG.7, shown is a flow chart of an example control method for an LED driver in accordance with embodiments of the present invention. In S110, the supplementary current generating circuit provided on the current path of the LED load can generate the supplementary current, such that the input current of the LED driver can meet conduction requirements of the silicon-controlled dimmer.

In this example, the control method can further include adjusting the first current flowing the first transistor according to the drive current sampling signal, which characterizes the drive current of the LED load. The first transistor is coupled in parallel with the supplementary current generating circuit.

In this example, the control method can further include controlling the first transistor, such that the change trend of the drive current of the LED load is opposite to the change trend of the rectified output voltage.

By adjusting the supplementary current, the sum of the supplementary current and the first current flowing through the first transistor is greater than or equal to the holding current of the silicon-controlled dimmer, in order to ensure that the silicon-controlled dimmer can normally conduct.

By adjusting the supplementary current to be greater than or equal to the holding current of the silicon-controlled dimmer, the silicon-controlled dimmer can normally conduct when the first current flowing through the first transistor decreases to around zero.

In this example, the supplementary current generating circuit is provided on the current path of the LED load, such that the input current of the LED driver can meet conduction requirements of the silicon-controlled dimmer, thereby reducing the loss of the LED driver and improving the efficiency of the LED driver.

## Claims

1. An LED driver comprising a silicon-controlled dimmer (TRIAC), **characterized in that** the LED driver comprises:
a first transistor (Q1, Q2, Q4) arranged on a current path of an LED load and being configured to generate a first current, wherein said first current is adjustable by a controller; and
a supplementary current generating circuit (43, 53, 63) coupled in parallel with said first transistor (Q1, Q2, Q4), and being configured to generate a supplementary current (Ibr, Ibr3, Ibr5) to ensure that an input current of said LED driver meets conduction requirements of said silicon-controlled dimmer (TRIAC), wherein
said supplementary current generating circuit (43, 53, 63) comprises a second transistor (Q3,Q5) and an error amplifier (GM), whereby the LED load is coupled in series with the parallel combination of the supplementary current generating circuit and said first transistor; and
whereby input terminals of said error amplifier (GM) respectively receive a supplementary current sampling signal and a reference signal (REF) and an output terminal of said error amplifier is adapted to generate a drive voltage for the second transistor such that the supplementary current flowing through the second transistor is adjusted; and
the sum of said supplementary current (Ibr, Ibr3, Ibr5) and said first current is greater than or equal to a holding current of said silicon-controlled dimmer (TRIAC).

2. The LED driver of claim 1, further comprising:
a first controller, configured to adjust said first current flowing through said first transistor (Q1, Q2, Q3) according to a drive current sampling signal, wherein said drive current sampling signal characterizes said driver current flowing through said LED load; and
a second sampling circuit, configured to sample said drive current to obtain said drive current sampling signal.

3. The LED driver of claim 2, wherein said supplementary current (Ibr, Ibr3, Ibr5) is greater than or equal to said holding current of said silicon- controlled dimmer (TRIAC).

4. The LED driver of claim 2, wherein said first controller is configured to control said first transistor (Q1, Q2, Q4), such that a change trend of said drive current is opposite to a change trend of a DC bus, and is configured to control a drive voltage of said first transistor (Q1, Q2, Q4), such that an average of said drive current follows an expected value.

5. The LED driver of claim 2, wherein said supplementary current generating circuit (43, 53, 63) comprises:
a first sampling circuit, coupled between a source terminal of said second transistor (Q3, Q5) and a source terminal of said first transistor (Q1, Q2, Q4), and being configured to obtain the
supplementary current sampling signal for characterizing said supplementary current (Ibr, Ibr3, Ibr5); and
the error amplifier (GM), configured to receive said supplementary current sampling signal and said reference signal (REF) that characterizes an expected value of said supplementary current (Ibr, Ibr3, Ibr5), and generate said drive voltage of said second transistor (Q3, Q5), in order to adjust a current flowing through said second transistor (Q3, Q5), thereby adjusting said supplementary current (Ibr, Ibr3, Ibr5).

6. The LED driver of claim 5, further comprising:
a third transistor, coupled between said LED load and a drain terminal of said first transistor (Q1, Q2, Q4); and
a second controller, configured to control said third transistor to be turned on continuously when said LED load is turned on, wherein said third transistor is a high voltage transistor, and said first and second transistors are low voltage transistors, and a reverse withstand voltage of said third transistor is greater than that of said first and second transistors.

7. The LED driver of claim 6, wherein second controller comprises:
a capacitor (C), coupled between a gate terminal of said third transistor and a ground, and being configured to control a drive voltage of said third transistor by being charged and discharged; and
a diode (D), having an anode coupled to a drain terminal of said first transistor (Q1, Q2, Q4), and a cathode coupled to a gate of said third transistor, wherein said diode (D) is configured to prevent said drive current from flowing back to a DC bus.

8. The LED driver of claim 1, further comprising:
a bleeder circuit (12, 44, 54, 64), coupled to a DC bus, and being configured to be controlled to bleed a bus current, wherein said bleeder circuit (12, 44, 54, 64) is configured to be turned off after said LED load is turned on.

9. A method for controlling an LED driver comprising a silicon-controlled dimmer (TRIAC), **characterized in that** the method comprises:
generating a first current by a first transistor (Q1, Q2, Q4) arranged on a current path of an LED load, wherein said first current is adjustable by a controller;
generating a supplementary current (Ibr, Ibr3, Ibr5), by a supplementary current generating circuit, in accordance with a drive current flowing through an LED load and a holding current of said silicon-controlled dimmer (TRIAC) to ensure that an input current of said LED driver meets conduction requirements of said silicon-controlled dimmer (TRIAC), whereby said supplementary current generating circuit is coupled in parallel with said first transistor and comprises a second transistor and an error amplifier; and
generating a drive current for the second transistor, by receiving at input terminals of said error amplifier a supplementary current sampling signal and a reference signal, the error amplifier outputting said drive current; and
adjusting the supplementary current (Ibr, Ibr3, Ibr5) flowing though the second transistor by said drive current

10. The control method of claim 9, further comprising:
adjusting a first current flowing through a first transistor (Q1, Q2, Q4) according to a drive current sampling signal for characterizing said drive current flowing through said LED load.

11. The control method of claim 10, wherein the sum of said supplementary current (Ibr, Ibr3, Ibr5) and said first current is greater than or equal to said holding current of said silicon controlled dimmer.

12. The control method of claim 11, wherein said generating a supplementary current (Ibr, Ibr3, Ibr5) in accordance with a drive current flowing through an LED load and a holding current of said silicon-controlled dimmer (TRIAC) comprises:
sampling said drive current and said supplementary current (Ibr, Ibr3, Ibr5); and
adjusting said supplementary current (Ibr, Ibr3, Ibr5) according to a difference between said supplementary current sampling signal and said reference signal (REF).

13. The control method of claim 12, wherein said adjusting said supplementary current (Ibr, Ibr3, Ibr5) according to a difference between said supplementary current sampling signal and said reference signal (REF) comprises:
comparing said supplementary current sampling signal for charactering said supplementary current (Ibr, Ibr3, Ibr5) with said reference signal, wherein said reference signal characterizes said holding current.

14. The control method of claim 13, wherein said adjusting said supplementary current (Ibr, Ibr3, Ibr5) comprises:
controlling said second transistor (Q3, Q5) coupled in parallel with said first transistor (Q1, Q2, Q4) to increase or decrease said supplementary current (Ibr, Ibr3, Ibr5) by said comparison.

15. The control method of claim 14, further comprising:
when a conduction angle of said silicon-controlled dimmer (TRIAC) is small, adjusting said supplementary current (Ibr, Ibr3, Ibr5), such that the sum of said supplementary current (Ibr, Ibr3, Ibr5) and said first current is greater than or equal to said holding current.

## Patentansprüche

1. LED-Treiber, umfassend einen siliziumgesteuerten Dimmer (TRIAC), **dadurch gekennzeichnet, dass** der LED-Treiber umfasst:
einen ersten Transistor (Q1, Q2, Q4), welcher auf einem Strompfad einer LED-Last angeordnet ist und welcher ausgebildet ist, einen ersten Strom zu erzeugen, wobei der erste Strom durch eine Steuerung einstellbar ist, und
einer Zusatzstromerzeugungsschaltung (43, 53, 63), welche mit dem ersten Transistor (Q1, Q2, Q4) parallel gekoppelt ist, und welche ausgebildet ist, einen Zusatzstrom (Ibr, Ibr3, Ibr5) zu erzeugen, um sicherzustellen, dass ein Eingangsstrom des LED-Treibers Leitungsanforderungen des siliziumgesteuerten Dimmers (TRIAC) erfüllt, wobei
die Zusatzstromerzeugungsschaltung (43, 53, 63) einen zweiten Transistor (Q3,Q5) und einen Fehlerverstärker (GM) umfasst, wobei die LED-Last mit der parallelen Kombination der Zusatzstromerzeugungsschaltung und dem ersten Transistor in Reihe gekoppelt ist; und
wobei Eingangsanschlüsse des Fehlerverstärkers (GM) jeweils ein Zusatzstromabtastsignal und ein Referenzsignal (REF) empfangen und ein Ausgangsanschluss des Fehlerverstärkers zum Generieren einer Ansteuerspannung für den zweiten Transistor ausgelegt ist, so dass der durch den zweiten Transistor fließende Zusatzstrom eingestellt ist; und
wobei die Summe des Zusatzstroms (Ibr, Ibr3, Ibr5) und des ersten Stroms größer oder gleich einem Haltestrom des siliziumgesteuerten Dimmers (TRIAC) ist.

2. LED-Treiber nach Anspruch 1, ferner umfassend:
eine erste Steuerung, die ausgebildet ist, den ersten Strom, der durch den ersten Transistor (Q1, Q2, Q3) fließt, gemäß einem Ansteuerstromabtastsignal einzustellen, wobei das Ansteuerstromabtastsignal den Treiberstrom kennzeichnet, der durch die LED-Last fließt; und
eine zweite Abtastschaltung, die ausgebildet ist, den Ansteuerstrom abzutasten, um das Ansteuerstromabtastsignal zu erhalten.

3. LED-Treiber nach Anspruch 2, wobei der Zusatzstrom (Ibr, Ibr3, Ibr5) größer oder gleich dem Haltestrom des siliziumgesteuerten Dimmers (TRIAC) ist.

4. LED-Treiber nach Anspruch 2, wobei die erste Steuerung ausgebildet ist, den ersten Transistor (Q1, Q2, Q4) so zu steuern, dass ein Änderungstrend des Ansteuerstroms einem Änderungstrend eines DC-Busses entgegengesetzt ist, und ausgebildet ist, eine Ansteuerspannung des ersten Transistors (Q1, Q2, Q4) so zu steuern, dass ein Durchschnitt des Ansteuerstroms einem Erwartungswert folgt.

5. LED-Treiber nach Anspruch 2, wobei die Zusatzstromerzeugungsschaltung (43, 53, 63) umfasst:
eine erste Abtastschaltung, die zwischen einem Source-Anschluss des zweiten Transistors (Q3, Q5) und einem Source-Anschluss des ersten Transistors (Q1, Q2, Q4) gekoppelt ist, und ausgebildet ist, das Zusatzstromabtastsignal zum Kennzeichnen des Zusatzstroms (Ibr, Ibr3, Ibr5) zu erhalten; und
den Fehlerverstärker (GM), der ausgebildet ist, das Zusatzstromabtastsignal und das Referenzsignal (REF), welches einen Erwartungswert des Zusatzstroms (Ibr, Ibr3, Ibr5) kennzeichnet, zu empfangen, und die Ansteuerspannung des zweiten Transistors (Q3, Q5) zu erzeugen, um einen durch den zweiten Transistor fließenden Strom einzustellen, wodurch der Zusatzstrom (Ibr, Ibr3, Ibr5) eingestellt wird.

6. LED-Treiber nach Anspruch 5, ferner umfassend:
einen dritten Transistor, der zwischen der LED-Last und einem Drain-Anschluss des ersten Transistors (Q1, Q2, Q4) gekoppelt ist; und
eine zweite Steuerung, die ausgebildet ist, den dritten Transistor zum kontinuierlichen Einschalten zu steuern, wenn die LED-Last eingeschaltet wird, wobei der dritte Transistor ein Hochspannungstransistor ist, und wobei der erste und zweite Transistor Niederspannungstransistoren sind, und wobei eine entgegengesetzte Stoßspannung des dritten Transistors größer als jene des ersten und zweiten Transistors ist.

7. LED-Treiber nach Anspruch 6, wobei die zweite Steuerung umfasst:
einen Kondensator (C), der zwischen einem Gate-Anschluss des dritten Transistors und Masse gekoppelt ist, und ausgebildet ist, eine Ansteuerspannung des dritten Transistors durch Aufladen und Entladen zu steuern; und
eine Diode (D), umfassend eine Anode, die mit einem Drain-Anschluss des ersten Transistors (Q1, Q2, Q4) gekoppelt ist, und eine Kathode, die mit einem Gate des dritten Transistors gekoppelt ist, wobei die Diode (D) ausgebildet ist, zu verhindern, dass der Ansteuerstrom zu einem DC-Bus zurückfließt.

8. LED-Treiber nach Anspruch 1, ferner umfassend:
eine Ableitschaltung (12, 44, 54, 64), die an einen DC-Bus gekoppelt ist und ausgebildet ist, zum Ableiten eines Busstromes gesteuert zu werden, wobei die Ableitschaltung (12, 44, 54, 64) ausgebildet ist, nach dem Einschalten der LED-Last ausgeschaltet zu werden.

9. Verfahren zum Steuern eines LED-Treibers, welcher einen siliziumgesteuerten Dimmer (TRIAC) umfasst, **dadurch gekennzeichnet, dass** das Verfahren umfasst:
Erzeugen eines ersten Stroms durch einen ersten Transistor (Q1, Q2, Q4), welcher auf einem Strompfad einer LED-Last angeordnet ist, wobei der erste Strom durch eine Steuerung einstellbar ist;
Erzeugen eines Zusatzstroms (Ibr, Ibr3, Ibr5) durch eine Zusatzstromerzeugungsschaltung gemäß einem durch eine LED-Last fließenden Ansteuerstrom und eines Haltestroms des siliziumgesteuerten Dimmers (TRIAC), um sicherzustellen, dass ein Eingangsstrom des LED-Treibers Leitungsanforderungen des siliziumgesteuerten Dimmers (TRIAC) erfüllt, wobei die Zusatzstromerzeugungsschaltung mit dem ersten Transistor parallel gekoppelt ist und einen zweiten Transistor und einen Fehlerverstärker umfasst; und
Erzeugen eines Ansteuerstroms für den zweiten Transistor durch Empfangen eines Zusatzstromabtastsignals und eines Referenzsignals an Eingangsanschlüssen des Fehlerverstärkers, wobei der Fehlerverstärker den Ansteuerstrom ausgibt; und
Einstellen des Zusatzstroms (Ibr, Ibr3, Ibr5), der durch den zweiten Transistor fließt, durch den Ansteuerstrom.

10. Steuerverfahren nach Anspruch 9, ferner umfassend:
Einstellen eines ersten Stroms, welcher durch einen ersten Transistor (Q1, Q2, Q4) fließt, gemäß einem Ansteuerstromabtastsignal zum Kennzeichnen des Ansteuerstroms, der durch die LED-Last fließt.

11. Steuerverfahren nach Anspruch 10, wobei die Summe des Zusatzstroms (Ibr, Ibr3, Ibr5) und des ersten Stroms größer oder gleich dem Haltestrom des siliziumgesteuerten Dimmers ist.

12. Steuerverfahren nach Anspruch 11, wobei das Erzeugen eines Zusatzstroms (Ibr, Ibr3, Ibr5) gemäß einem durch eine LED-Last fließenden Ansteuerstrom und einem Haltestrom des siliziumgesteuerten Dimmers umfasst:
Abtasten des Ansteuerstroms und des Zusatzstroms (Ibr, Ibr3, Ibr5); und
Einstellen des Zusatzstroms (Ibr, Ibr3, Ibr5) gemäß einer Differenz zwischen dem Zusatzstromabtastsignal und dem Referenzsignal (REF).

13. Steuerverfahren nach Anspruch 12, wobei das Einstellen des Zusatzstroms (Ibr, Ibr3, Ibr5) gemäß einer Differenz zwischen dem Zusatzstromabtastsignal und dem Referenzsignal (REF) umfasst:
Vergleichen des Zusatzstromabtastsignals zum Kennzeichnen des Zusatzstroms (Ibr, Ibr3, Ibr5) mit dem Referenzsignal, wobei das Referenzsignal den Haltestrom kennzeichnet.

14. Steuerverfahren nach Anspruch 13, wobei das Einstellen des Zusatzstroms (Ibr, Ibr3, Ibr5) umfasst:
Steuern des zweiten Transistors (Q3, Q5), der parallel mit dem ersten Transistor (Q1, Q2, Q4) gekoppelt ist, um den Zusatzstrom (Ibr, Ibr3, Ibr5) durch den Vergleich zu erhöhen oder zu verringern.

15. Steuerverfahren nach Anspruch 14, ferner umfassend:
Einstellen des Zusatzstroms (Ibr, Ibr3, Ibr5), wenn ein Leitungswinkel des siliziumgesteuerten Dimmers (TRIAC) klein ist, so dass die Summe des Zusatzstroms (Ibr, Ibr3, Ibr5) und des ersten Stroms größer oder gleich dem Haltestrom ist.

## Revendications

1. Élément d'attaque de diode électroluminescente, DEL, comprenant un gradateur commandé au silicium (TRIAC), **caractérisé en ce que** l'élément d'attaque de DEL comprend :
un premier transistor (Q1, Q2, Q4) agencé sur un chemin de courant d'une charge de DEL et qui est configuré pour générer un premier courant, dans lequel ledit premier courant est apte à être ajusté par un dispositif de commande ; et
un circuit (43, 53, 63) de génération de courant supplémentaire couplé en parallèle avec ledit premier transistor (Q1, Q2, Q4), et qui est configuré pour générer un courant supplémentaire (Ibr, Ibr3, Ibr5) pour garantir qu'un courant d'entrée dudit élément d'attaque de DEL satisfait à des exigences de conduction dudit gradateur commandé au silicium (TRIAC), dans lequel
ledit circuit (43, 53, 63) de génération de courant supplémentaire comprend un deuxième transistor (Q3, Q5) et un amplificateur d'erreur (GM), ce par quoi la charge de DEL est couplée en série avec la combinaison en parallèle du circuit de génération de courant supplémentaire et dudit premier transistor ; et
ce par quoi les bornes d'entrée dudit amplificateur d'erreur (GM) reçoivent respectivement un signal d'échantillonnage de courant supplémentaire et un signal de référence (REF) et une borne de sortie dudit amplificateur d'erreur est adaptée pour générer une tension d'attaque pour le deuxième transistor de sorte que le courant supplémentaire circulant à travers le deuxième transistor soit ajusté ; et
la somme dudit courant supplémentaire (Ibr, Ibr3, Ibr5) et dudit premier courant est supérieure ou égale à un courant de maintien dudit gradateur commandé au silicium (TRIAC).

2. Élément d'attaque de DEL selon la revendication 1, comprenant en outre :
un premier dispositif de commande, configuré pour ajuster ledit premier courant circulant à travers ledit premier transistor (Q1, Q2, Q3) selon un signal d'échantillonnage de courant d'attaque, dans lequel ledit signal d'échantillonnage de courant d'attaque caractérise ledit courant d'élément d'attaque circulant à travers ladite charge de DEL ; et
un second circuit d'échantillonnage, configuré pour échantillonner ledit courant d'attaque pour obtenir ledit signal d'échantillonnage de courant d'attaque.

3. Élément d'attaque de DEL selon la revendication 2, dans lequel ledit courant supplémentaire (Ibr, Ibr3, Ibr5) est supérieur ou égal audit courant de maintien dudit gradateur commandé au silicium (TRIAC).

4. Élément d'attaque de DEL selon la revendication 2, dans lequel ledit premier dispositif de commande est configuré pour commander ledit premier transistor (Q1, Q2, Q4), de sorte qu'une tendance de variation dudit courant d'attaque est opposée à une tendance de variation d'un bus à courant continu, CC, et est configuré pour commander une tension d'attaque dudit premier transistor (Q1, Q2, Q4), de sorte qu'une moyenne dudit courant d'attaque suive une valeur attendue.

5. Élément d'attaque de DEL selon la revendication 2, dans lequel ledit circuit (43, 53, 63) de génération de courant supplémentaire comprend :
un premier circuit d'échantillonnage, couplé entre une borne de source dudit deuxième transistor (Q3, Q5) et une borne de source dudit premier transistor (Q1, Q2, Q4), et qui est configuré pour obtenir le signal d'échantillonnage de courant supplémentaire pour caractériser ledit courant supplémentaire (Ibr, Ibr3, Ibr5) ; et
l'amplificateur d'erreur (GM), configuré pour recevoir ledit signal d'échantillonnage de courant supplémentaire et ledit signal de référence (REF) qui caractérise une valeur attendue dudit courant supplémentaire (Ibr, Ibr3, Ibr5), et générer ladite tension d'attaque dudit deuxième transistor (Q3, Q5), afin d'ajuster un courant circulant à travers ledit deuxième transistor (Q3, Q5), ce qui ajuste ledit courant supplémentaire (Ibr, Ibr3, Ibr5).

6. Élément d'attaque de DEL selon la revendication 5, comprenant en outre :
un troisième transistor, couplé entre ladite charge de DEL et une borne de drain dudit premier transistor (Q1, Q2, Q4) ; et
un second dispositif de commande, configuré pour commander ledit troisième transistor afin qu'il soit mis à l'état passant en continu lorsque ladite charge de DEL est mise à l'état passant, dans lequel ledit troisième transistor est un transistor à haute tension, et lesdits premier et deuxième transistors sont des transistors à basse tension, et une tension de tenue inverse dudit troisième transistor est supérieure à celle desdits premier et deuxième transistors.

7. Élément d'attaque de DEL selon la revendication 6, dans lequel le second dispositif de commande comprend :
un condensateur (C), couplé entre une borne de grille dudit troisième transistor et une masse, et qui est configuré pour commander une tension d'attaque dudit troisième transistor en étant chargé et déchargé ; et
une diode (D), ayant une anode couplée à une borne de drain dudit premier transistor (Q1, Q2, Q4), et une cathode couplée à une grille dudit troisième transistor, dans lequel ladite diode (D) est configurée pour empêcher ledit courant d'attaque de circuler en retour vers un bus à CC.

8. Élément d'attaque de DEL selon la revendication 1, comprenant en outre :
un circuit de purge (12, 44, 54, 64), couplé à un bus à CC, et qui est configuré pour être commandé pour purger un courant de bus, dans lequel ledit circuit de purge (12, 44, 54, 64) est configuré pour être mis à l'état bloqué après que ladite charge de LED est mise à l'état passant.

9. Procédé pour la commande d'un élément d'attaque de DEL comprenant un gradateur commandé au silicium (TRIAC), **caractérisé en ce que** le procédé comprend :
la génération d'un premier courant par un premier transistor (Q1, Q2, Q4) agencé sur un chemin de courant d'une charge de DEL, dans lequel ledit premier courant est apte à être ajusté par un dispositif de commande ;
la génération d'un courant supplémentaire (Ibr, Ibr3, Ibr5), par un circuit de génération de courant supplémentaire, selon un courant d'attaque circulant à travers une charge de DEL et un courant de maintien dudit gradateur commandé au silicium (TRIAC) pour garantir qu'un courant d'entrée dudit élément d'attaque de DEL satisfait à des exigences de conduction dudit gradateur commandé au silicium (TRIAC), ce par quoi ledit circuit de génération de courant supplémentaire est couplé en parallèle avec ledit premier transistor et comprend un deuxième transistor et un amplificateur d'erreur ; et
la génération d'un courant d'attaque pour le deuxième transistor, par la réception, aux bornes d'entrée dudit amplificateur d'erreur, d'un signal d'échantillonnage de courant supplémentaire et d'un signal de référence, l'amplificateur d'erreur délivrant en sortie ledit courant d'attaque ; et
l'ajustement du courant supplémentaire (Ibr, Ibr3, Ibr5) circulant à travers le deuxième transistor par ledit courant d'attaque.

10. Procédé de commande selon la revendication 9, comprenant en outre :
l'ajustement d'un premier courant circulant à travers un premier transistor (Q1, Q2, Q3) selon un signal d'échantillonnage de courant d'attaque pour caractériser ledit courant d'attaque circulant à travers ladite charge de DEL.

11. Procédé de commande selon la revendication 10, dans lequel la somme dudit courant supplémentaire (Ibr, Ibr3, Ibr5) et dudit premier courant est supérieure ou égale audit courant de maintien dudit gradateur commandé au silicium.

12. Procédé de commande selon la revendication 11, dans lequel ladite génération d'un courant supplémentaire (Ibr, Ibr3, Ibr5) selon un courant d'attaque circulant à travers une charge de DEL et un courant de maintien dudit gradateur commandé au silicium (TRIAC) comprend :
l'échantillonnage dudit courant d'attaque et dudit courant supplémentaire (Ibr, Ibr3, Ibr5) ; et
l'ajustement dudit courant supplémentaire (Ibr, Ibr3, Ibr5) selon une différence entre ledit signal d'échantillonnage de courant supplémentaire et ledit signal de référence (REF).

13. Procédé de commande selon la revendication 12, dans lequel ledit ajustement dudit courant supplémentaire (Ibr, Ibr3, Ibr5) selon une différence entre ledit signal d'échantillonnage de courant supplémentaire et ledit signal de référence (REF) comprend :
la comparaison dudit signal d'échantillonnage de courant supplémentaire pour caractériser ledit courant supplémentaire (Ibr, Ibr3, Ibr5) avec ledit signal de référence, dans lequel ledit signal de référence caractérise ledit courant de maintien.

14. Procédé de commande selon la revendication 13, dans lequel ledit ajustement dudit courant supplémentaire (Ibr, Ibr3, Ibr5) comprend :
la commande dudit deuxième transistor (Q3, Q5) couplé en parallèle avec ledit premier transistor (Q1, Q2, Q4) pour augmenter ou diminuer de ladite comparaison ledit courant supplémentaire (Ibr, Ibr3, Ibr5).

15. Procédé de commande selon la revendication 14, comprenant en outre :
lorsqu'un angle de conduction dudit gradateur commandé au silicium (TRIAC) est faible, l'ajustement dudit courant supplémentaire (Ibr, Ibr3, Ibr5), de sorte que la somme dudit courant supplémentaire (Ibr, Ibr3, Ibr5) et dudit premier courant soit supérieure ou égale audit courant de maintien.
